# EUROPÄISCHE PATENTANMELDUNG

(11) **EP 1 277 557 A1**
(43) Veröffentlichungstag der Anmeldung: **22.01.2003**
(21) Anmeldenummer: 02405552.7
(22) Anmeldetag: 02.07.2002
(51) Int. Cl.: B29C 45/16

(54) **Spritzgiessmaschine**

(30) Priorität: 16.07.2001 CH 13122001
(71) Anmelder: Schöttli AG, 8253 Diessenhofen (CH)
(72) Erfinder: Zangerle, Wolfgang, 8442 Hettlingen (CH)
(74) Vertreter: Gachnang, Hans Rudolf

(57) **Zusammenfassung**

Die drehbar in einem Gegenformträger gelagerte Gegenform (11) umfasst zwei Auswerferwellen (39) für den Antrieb der Auswerfer- und Führungsbolzen. Der Antrieb der Auswerferwellen (39) erfolgt abwechselnd durch die Übertriebswelle (33), die im Gegenformträger gelagert und durch einen Antrieb antreibbar ist.

## Beschreibung

Gegenstand der Erfindung ist eine Spritzgiessmaschine gemäss Oberbegriff des Patentanspruchs 1.

Spritzgiessmaschinen der genannten Gattung sind in vielen Ausführungen bekannt. Sie dienen dazu, ein Werkstück in zwei sich folgenden Einspritzschritten aus unterschiedlichen Kunststoffkomponenten herzustellen. Beispielsweise ein Werkstück, das zweifarbig sein soll oder ein Werkstück, das aus Kunststoffen unterschiedlicher Härte und Art bestehen soll.

Aus der DE 1 215 353 ist eine Spritzgiessmaschine mit mindestens zwei je von einem gesonderten Spritzaggregat bedienten Spritzgiessformen bekannt. Die beiden Anguss-Formhälften sind auf gemeinsamen Führungen axial bewegbar und liegen sich gegenüber. Zwischen den beiden Anguss-Formhälften und auf den gleichen Führungen gelagert, ist ein Gegenformträger mit zwei Gegenformhälften aufweisende Gegenform eingesetzt. Der axiale Antrieb, d.h. das gegenseitige Verschieben der drei Formteile, erfolgt durch einen einzigen Antrieb, mit dem die eine Anguss-Formhälfte unter Überwindung der Kraft von Federn oder Zahnradgetrieben, die zwischen der zentralen Gegenform und den beiden aussenliegenden Anguss-Formen angeordnet sind, angetrieben wird. Die Gegenform bewegt sich folglich stets in der Mitte zwischen den beiden Anguss-Formhälften bis beide Kavitäten geschlossen sind. Wegen den sich daraus ergebenden Relativbewegungen der einzelnen Formen, insbesondere auch der zentral gelegenen Gegenform, wird in der bekannten Spritzgiessmaschine der Auswerfer zum Auswerfen der fertiggestellten Werkstücke aus der Gegenform durch in der Gegenform angeordnete pneumatisch, hydraulisch oder elektrisch angetriebene Mittel betätigt. Für den hydraulischen Antrieb wird zum einen eine flexible Speisung mit Oel notwendig und zum andern nimmt der. Zylinder im Innern des Gegenwerkzeugs sehr viel Raum ein. Als weiterer Nachteil erweist sich die Drehverbindung vom fahrbaren Trägerrahmen auf die drehbare Gegenform.

Aufgabe der vorliegenden Erfindung ist die Schaffung einer Spritzgiessmaschine mit einem drehbaren Spritzgiesswerkzeug, dessen Auswerfer auf kleinstem Raum Platz findet und keine Energie-Zuleitungen (Öl, Luft, Strom) über die Drehachse gebracht werden müssen.

Gelöst wird diese Aufgabe durch eine Spritzgiessmaschine gemäss den Merkmalen des Patentanspruchs 1. Vorteilhafte Ausgestaltungen werden in den abhängigen Ansprüchen definiert.

Die Anordnung des Antriebselements für den Auswerfer am die Gegenform tragenden Trägerrahmen erlaubt es, in optimaler Weise in der drehbaren Gegenform die Auswerfer anzutreiben und es kann auf Energiezufuhrleitungen verzichtet werden, welche auch die Drehbewegungen nebst der Längsverschiebung der Gegenform aufnehmen müssen. Dies führt zu einer kostengünstigeren Herstellung und einer hohen Sicherheit während des Spritzens. Die erfindungsgemässe Anordnung erlaubt es zudem, die Auswerferbolzen während der sehr raschen Drehbewegung des Gegenwerkzeugs zwischen den einzelnen Spritzvorgängen zu arretieren, so dass trotz hoher Massenkräfte (Zentripetalkraft) ein frühzeitiger Ausstoss, Beschädigung, Kollision oder Teilausstoss der Werkstücke sicher verhindert werden können. In Innern des Gegenwerkzeugs sind sehr wenig mechanisch bewegliche Teile vorhanden und diese sind zudem sehr einfach aufgebaut, so dass weder durch Abnutzung noch durch andere Einflüsse Probleme bei deren Betätigung entstehen können. Der Antrieb der beiden Auswerfer wird von ein und demselben Antriebselement übernommen und dieses ist, da auf dem Gegenwerkzeugträger angeordnet, leicht zu warten. Auch ist eine Kühlung des Antriebs nicht notwendig, da im Bereich des Gegenwerkzeugträgers keine wesentliche Temperaturerhöhung durch den Spritzprozess vorliegt.
Die Auswerferpakete werden kraftsymmetrisch bewegt, um einen Verschleiss oder ein Verkanten zu verhindern.

Anhand eines illustrierten Ausführungsbeispiels wird die Erfindung nachfolgend erläutert. Es zeigen die rein schematischen Darstellungen in
- Figur 1: zwei beabstandet liegende Anguss-Formhälften und der dazwischen angeordneten, in einem Träger drehbar gelagerten Gegenform (Längsführungen für die drei Formteile weggelassen),
- Figur 2: eine perspektivische Darstellung der Gegenform und des Gegenformträgers sowie des Antriebs für die Auswerfer,
- Figur 3: eine vergrösserte Darstellung des Auswerferantriebs an der Gegenform sowie der Übertriebswelle am Gegenformträger,
- Figur 4: eine Schrägaufsicht auf den Oberteil der Gegenform und der mit dem Gegenträger fest verbundenen Rückhaltescheibe,
- Figur 5: eine perspektivische Ansicht des Auswerferantriebs mit der Übertriebswelle,
- Figur 6: eine schematische Darstellung der Übertriebs-Wellenverlängerung in der Gegenform mit der Auswerferplatte,
- Figur 7: eine Vorderansicht der Antriebsorgane für die Auswerferplatte (übrige Teile der Gegenform weggelassen),

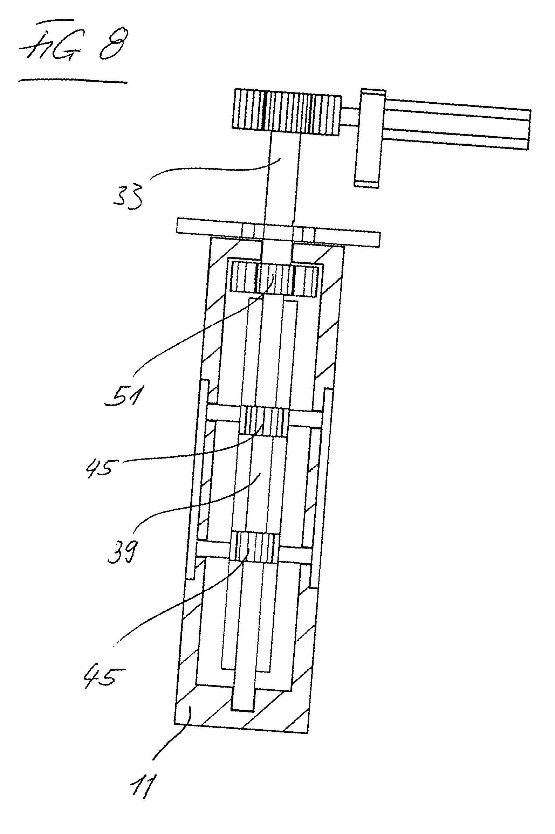

- Figur 8: einen Querschnitt längs Linie VIII-VIII in Figur 7,
- Figur 9: zwei beabstandet liegende Anguss-Formhälften und der dazwischen angeordneten, in einem Träger drehbar gelagerten Gegenform (Längsführungen für die drei Formteile weggelassen) beim Ausstossen des Werkstücks,
- Figur 10: eine schematische Draufsicht einer Spritzgiessmaschine mit einer drehbaren Gegenform (Form geschlossen),
- Figur 11: eine schematische Draufsicht einer Spritzgiessmaschine mit einer drehbaren Gegenform (Form während Drehvorgang),
- Figur 12: eine schematische Draufsicht einer Spritzgiessmaschine mit einer drehbaren Gegenform (Form geöffnet und Auswerfer vorgefahren).
- Figur 13: eine schematische Draufsicht einer Spritzgiessmaschine mit einer drehbaren Gegenform (Form geöffnet und Auswerfer vorgefahren) mit zwei Zahnstangen und Differentialritzel.

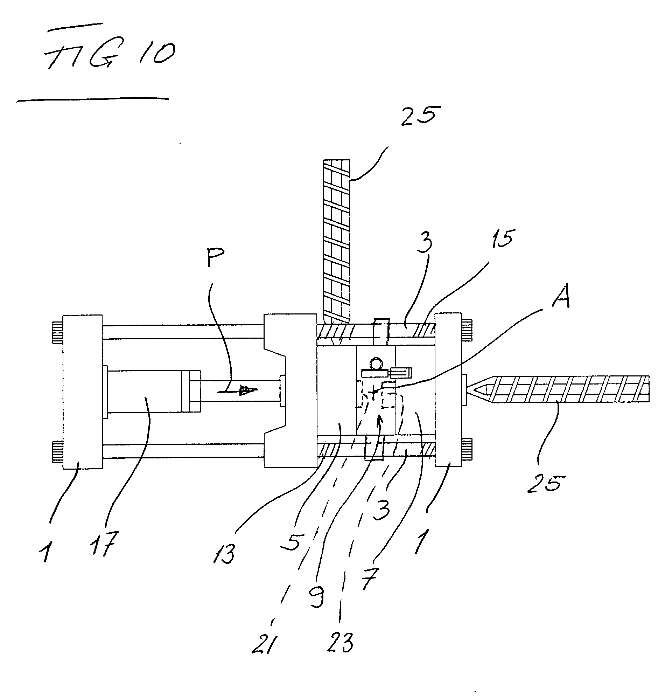

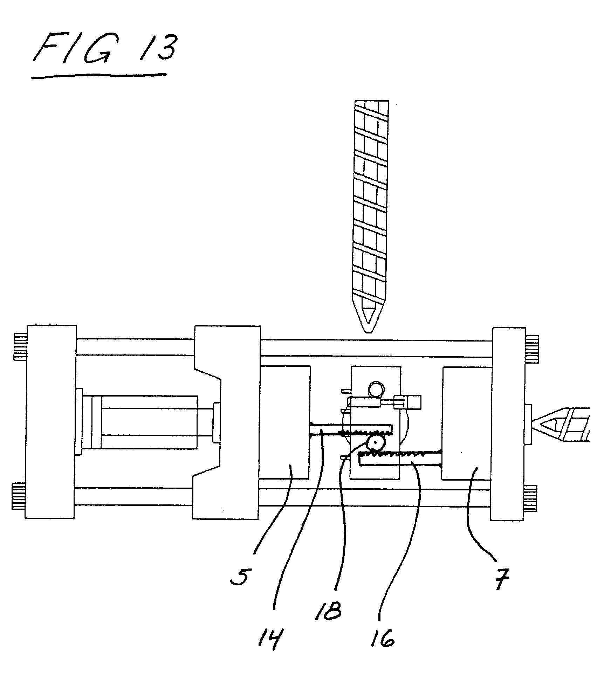

In den Figuren 10 bis 12 sind in der rein schematischen Darstellung des mechanischen Aufbaus der Spritzgiessmaschine die Elemente der tragenden Konstruktion weggelassen. Zwischen den beiden feststehenden Endplatten 1 sind vier Führungsstangen 3 (jeweils nur die vorne liegende sichtbar) befestigt. Auf den Führungsstangen sind zwei äussere Anguss-Formhälften, kurz Formhälften 5 und 7, sowie der Trägerrahmen 9 für eine Gegenform 11 verschiebbar gelagert, umschliessen diese jedoch nicht. Zwischen der ersten Formhälfte 5 und dem Trägerrahmen 9 können auf den vier Führungen 3 Schraubenfedern 13 und zwischen der zweiten Formhälfte 7 und dem Trägerrahmen 9 Schraubenfedern 15 eingesetzt sein. Die Schraubenfedern 13,15 bewirken beim Vorschieben der ersten Formhälfte 5 durch einen Formschliess-Antrieb 17 in Richtung des Pfeils P ein gleichmässiges Heranfahren der beiden Formhälften 5,7 an die Gegenform 11. Umgekehrt lösen sich die drei Formteile voneinander beim Zurückziehen der ersten Formhälfte 5 durch den Formschliess-Antrieb 17.
In einer bevorzugten Ausgestaltung des Relativantriebs der beiden Formhälften 5,7 und der Gegenform 11 dient ein Zahnradgetriebe mit Zahnstangen 14 und 16, deren aussenliegende Enden jeweils an der ersten Formhälfte 5 bzw. an der zweiten Formhälfte 7 befestigt sind und deren sich überschneidende innere Enden mit einem Differentialritzel 18 auf der Gegenform 11 kämmen (Figur 13).
In den beiden horizontal liegenden Holmen 19 des Trägerrahmens 9 ist die Gegenform 11 um die Achse A drehbar gelagert. Dies ermöglicht, die erste Kavität 21, welche in Figur 10 der ersten Formhälfte 5 gegenüberliegt, um 180° zu drehen und die zweite Kavität 23, die anfänglich der zweiten Formhälfte 7 gegenüberliegt, an die Stelle der ersten Kavität 21 zu bringen, wo sie der Kavität in der ersten Formhälfte 5 gegenüberliegt.

In die beiden Formhälften 5 und 7 münden Anspritzdüsen 25, welche die beiden Komponenten, welche unterschiedliche Farbe oder Produkteart haben können, in die Kavitäten der ersten und der zweiten Formhälften 5,7 einspritzen.

Auf dem Holm 19 ist ein Linearantriebselement 27, z.B. ein Servomotor, auf einem Motorträger 28 aufgesetzt. Die Abtriebsstange des Linearantriebselements 27 ist als Zahnstange 29 ausgebildet und kämmt mit einem Zahnritzel 31 am oberen Ende einer Übertriebswelle 33. Die Übertriebswelle 33 ist drehbar im Rahmen 9 gelagert. Das Drehlager, welches ein Gleit- oder ein Rollenlager sein kann, ist nicht dargestellt.
Alternativ könnte die Übertriebswelle 33 direkt oder indirekt mit der Abtriebswelle eines Drehantriebs verbunden sein (keine Abb.).

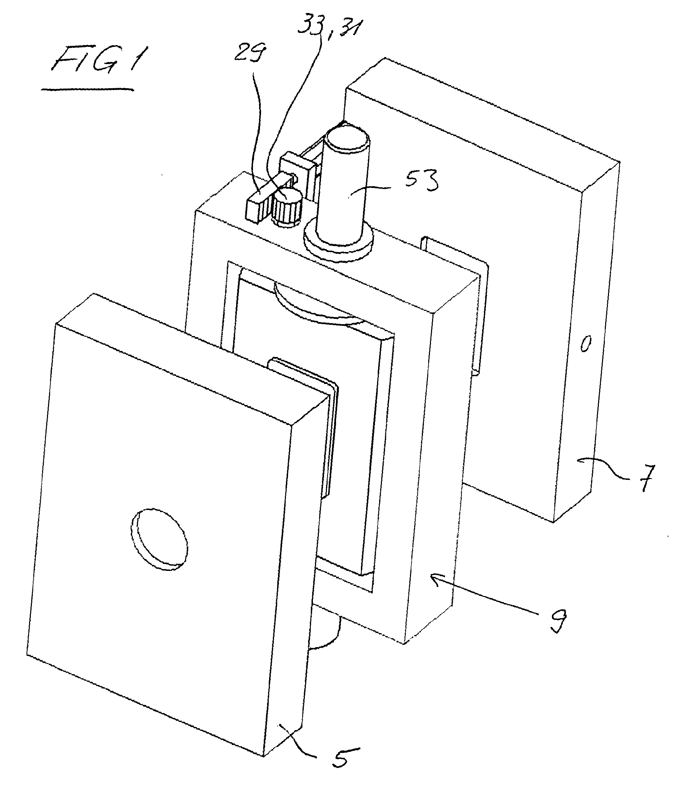

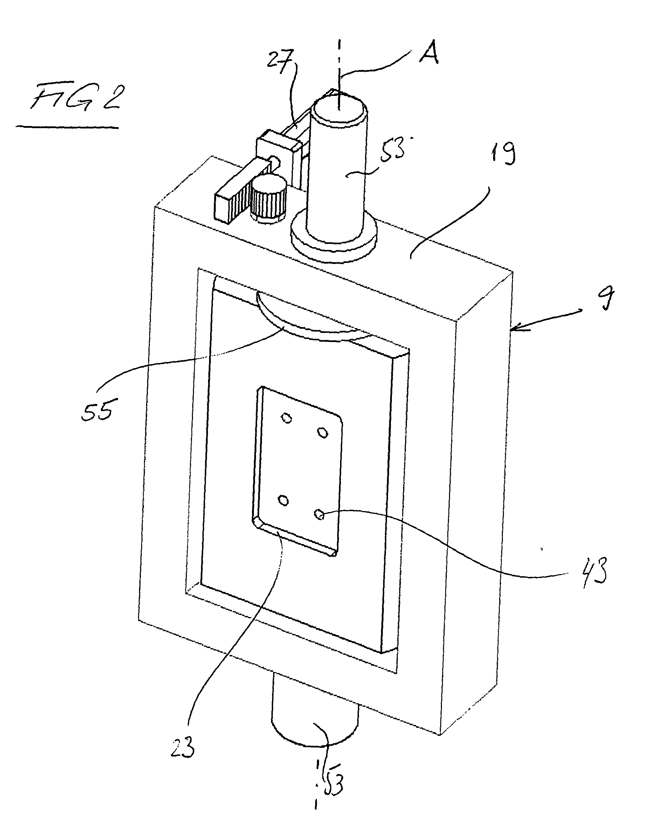

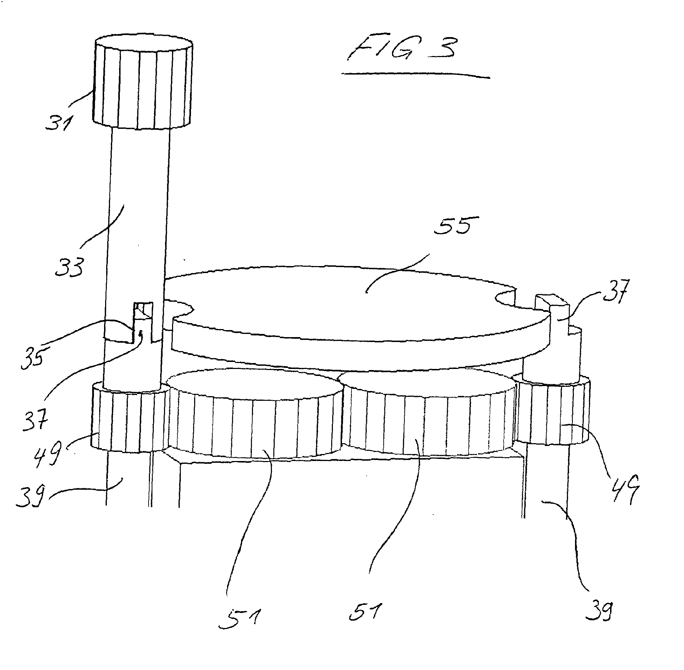

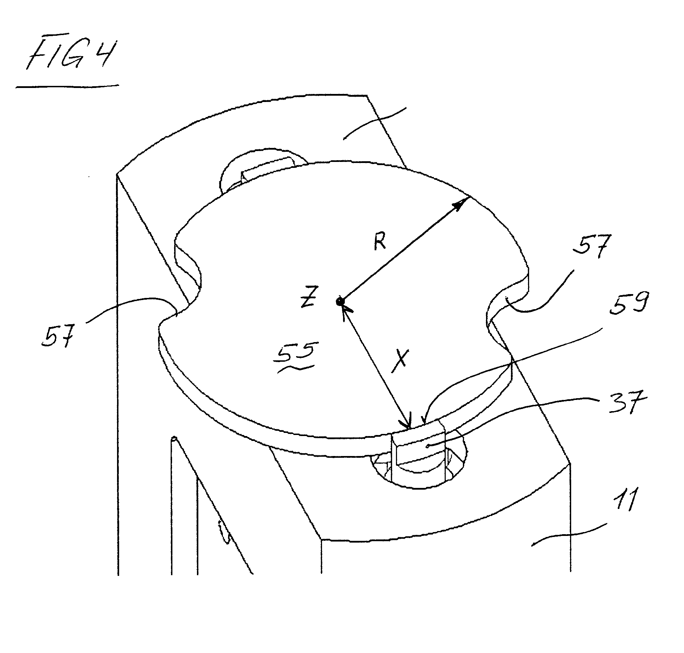

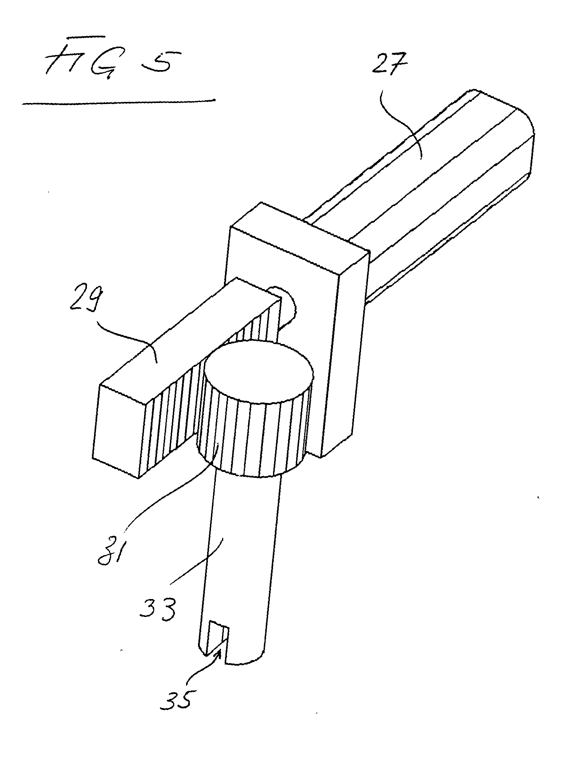

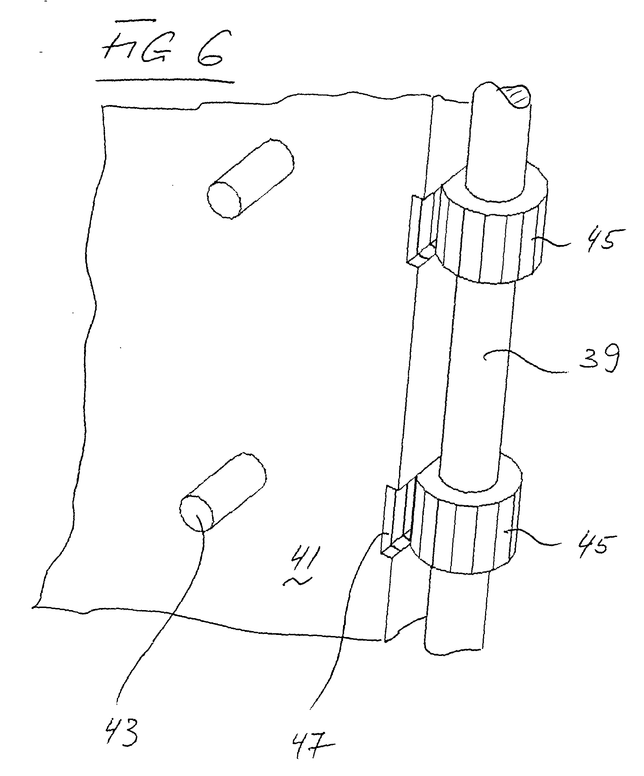

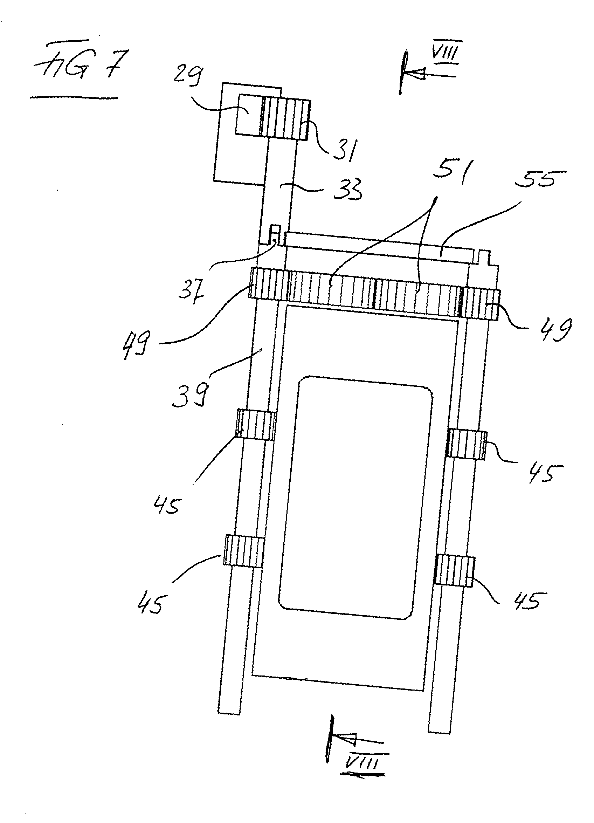

Das untere Ende der Übertriebswelle 33 ist stirnseitig mit einem Kupplungsschlitz 35 versehen (Fig. 1-3,5). Letzterer umgreift in eingekuppeltem Zustand beidseitig einen komplementär ausgestalteten Kupplungskeil 37 am oberen Ende einer Auswerferwelle 39 für eine Auswerferplatte 41 mit Führungs- oder Auswerferbolzen 43. Die Auswerferwellen 39 sind drehbar in der Gegenform 11 gelagert und deren Kupplungskeil 37 überragt die Oberkante der Gegenform 11. Die Auswerferbolzen 43 an der Auswerferplatte 41, die parallel verschiebbar in der Gegenform geführt ist, durchdringen entsprechend dimensionierte Bohrungen 44 in einer der beiden Kavitäten 21 oder 23 in der Gegenform 11. In Gegenform 11 sind die angeordneten Auswerferwellen 39 oben und unten drehbar gelagert. Auf den beiden Auswerferwellen 39 sind innerhalb der Gegenform 11 je zwei Ritzel 45 drehfest aufgesetzt oder angeformt, welche mit entsprechenden Zahnstangenabschnitten 47 an den vertikalen Seitenkanten der Auswerferplatte 41 in Eingriff stehen (vergl. Figuren 6/7). Die Auswerferplatte 41 ist, beispielsweise geführt an den Auswerferbolzen 43 in den Bohrungen 44, in der Gegenform 11 parallel verschiebbar. Weiter sind an den Auswerferwellen 39 unterhalb der Kupplungskeile 37 Zahnräder 49 aufgesetzt, die in Eingriff mit einem Paar an der Gegenform 11 fliegend gelagerten Übertriebsrädern 51 stehen (Fig. 5/7).
Die Gegenform 11 ist mit je einem oben und unten angebrachten Zapfen 53 am Trägerrahmen 9 um eine Achse A drehbar gelagert und mit einem in den Figuren nicht dargestellten Drehantrieb, z.B. einem Servomotor oder Schwenkmotor, verbunden.
Am oberen Holm 19 des Rahmens 9 ist weiter eine kreisförmige Führungsscheibe 55 befestigt, an deren Peripherie diagonal gegenüberliegend zwei halbkreisförmige Ausnehmungen 57 angebracht sind. Der Radius R der Führungsscheibe 55 ist unwesentlich kleiner als der Abstand X der tangential zu der Peripherie der Führungsscheibe 55 liegenden Flanken 59 der Kupplungskeile 37 vom Zentrum Z. Eine Drehung der Auswerferwellen 39 wird verhindert (Figur 4). Wenn die Führungskeile 37 in den Bereich der Ausnehmungen 57 gelangen, können die Auswerferwellen 39 drehen und einer der beiden Führungskeile 37 gelangt in Eingriff mit dem Kupplungsschlitz 35 an der Übertriebswelle 33, deren unteres Ende in die Ausnehmung 57 eingreift (Figur 3).

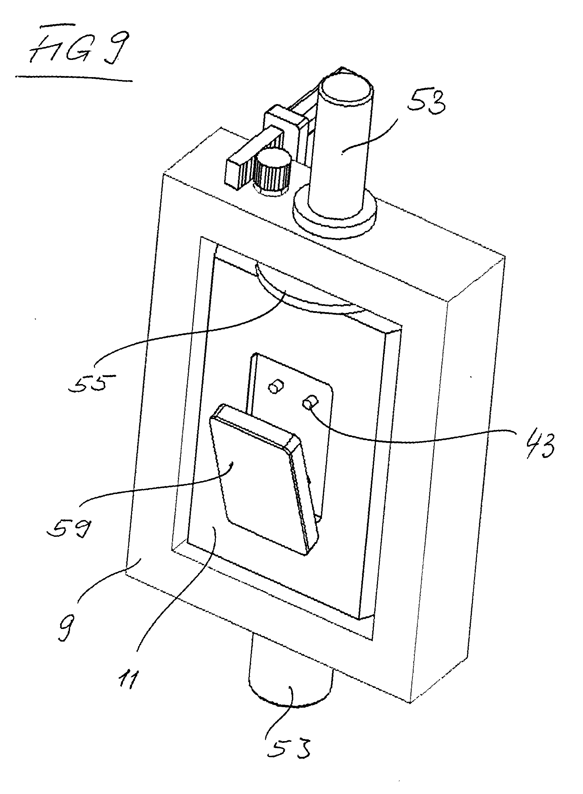

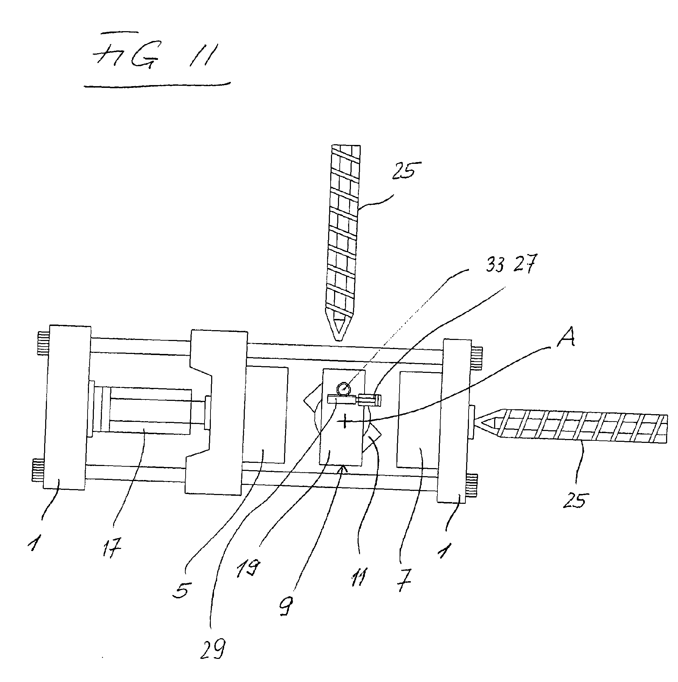

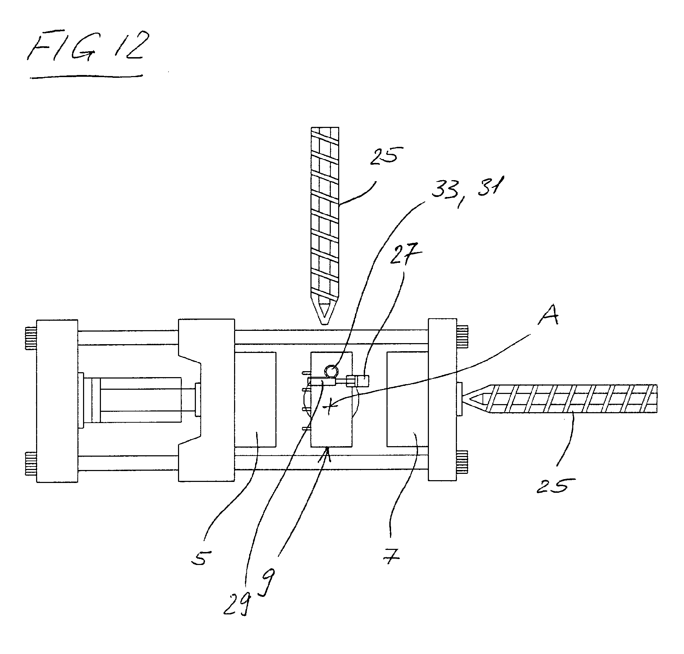

Nachfolgend wird die Funktionsweise der erfindungsgemässen Spritzgiessmaschine und insbesondere das Auswerfen des Werkstücks 59 beschrieben.
Mit dem Formschliess-Antrieb 17 werden die drei Teile der Spritzgussform, nämlich die beiden Formhälften 5,7 und die Gegenform 11, unter Kontrolle des Zahnradgetriebes geschlossen und Kunststoff in die beiden Kavitäten 21,23 eingespritzt. Während dieses Vorgangs ist der Führungskeil 37 an der einen Auswerferwelle 39 in Eingriff mit dem Kupplungsschlitz 35 der Übertriebswelle 33. Nach Beendigung des Einspritzvorgangs und der entsprechend notwendigen Abkühlzeit erfolgt das öffnen der Werkzeuge in die Stellung, wie sie in Figur 12 dargestellt ist. Sobald diese Offenstellung erreicht ist, wird durch den nicht dargestellten Antrieb die Gegenform 11 gedreht (in Figur 11 um 180° gedreht). Zu Beginn der Drehbewegung gleitet der Führungskeil 37 aus dem Kupplungsschlitz 35 und wird während der 180°-Drehung durch die Peripherie der Führungsscheibe 55 daran gehindert, dass eine unbeabsichtigte Drehung der Auswerferwellen 39 erfolgen kann. Sobald die 180°-Drehung beendet ist, liegt der Führungskeil 37 in der gegenüberliegenden Ausnehmung und der andere Führungskeil 37 gelangt in den Kupplungsschlitz 35 an der Übertriebswelle 33. Falls in der einen Kavität 23 bereits die zweite Komponente eingespritzt worden ist, erfolgt nun durch eine Drehung der Übertriebswelle 33 das Auswerfen des ersten fertiggestellten Werkstücks 59. Mit dem Linearantrieb 27 wird über die Zahnstange 29 das Ritzel 31 und damit die Übertriebswelle 33 gedreht. Diese Drehbewegung wird durch die Kupplungsmittel auf die daran angekuppelte Auswerferwelle 39 übertragen und von dieser über die beiden Übertriebsräder 51 auf die gegenüberliegende Auswerferwelle 39 weitergegeben. Von den beiden Übertriebswellen 39 bzw. den daran befestigten Ritzeln 45 wird die Drehbewegung in eine lineare Bewegung der Auswerferplatte 41 umgewandelt und mit den daran befestigten Auswerferbolzen 43 das Werkstück aus der Kavität 23 ausgeworfen (vgl. Figur 9). Sobald das Werkstück zwischen der Gegenform 11 und der Formhälfte 5 herausgefallen ist, werden die Formteile wieder zusammengeführt (vgl. Figur 10) und in beide Kavitäten 21,23 Kunststoff eingespritzt. Nach der Abkühlphase erfolgt so rasch wie möglich die nächste Drehbewegung um 180°, d.h. die Führungskeile verlassen wiederum den Kupplungsschlitz 35 und werden während der Drehbewegung an der Peripherie der Führungsscheibe 55 positioniert gehalten. Dieses definierte Halten bzw. Verhindern einer Drehung der Auswerferwelle 39 stellt sicher, dass durch die auf die Auswerferplatte 41 wirkenden Zentripetalkräfte, die Auswerferplatte 41 in ihrer eingefahrenen Stellung sicher gehalten und damit das Werkstück 59 während der Drehung nicht ausgeworfen wird. Es ist möglich, das Werkstück 59 vor oder nach der Drehungbewegung der Gegenform 11 auszuwerfen.

## Patentansprüche

1. Spritzgiessmaschine mit einem Spritzgiesswerkzeug, umfassend zwei relativ zueinander verschiebbar gelagerte erste und zweite Anguss-Formhälften (5,7) und eine dazwischen angeordnete um eine Achse drehbare Gegenform (11) mit einer ersten und einer zweiten Kavität (21,23), wobei die beiden Anguss-Formhälften (5,7) und die in einem Gegenformträger (9) drehbare Gegenform (11) mit einem Formschliess-Antrieb (17) vor dem Spritzgiessen gegeneinander fahrbar und nach dem Spritzgiessen auseinanderfahrbar sind, derart, dass die Gegenform (11) drehbar ist, so dass die erste Anguss-Formhälfte (5) abwechselnd der ersten Kavität (21) und die zweite Anguss-Formhälfte (7) der zweiten Kavität (23) der Gegenform (11) gegenüberliegen, umfassend weiter einen Auswerferbolzen (43) zum Auswerfen des Werkstücks (59) nach dem Anspritzen der zweiten Komponente aus der Kavität (21 oder 23) der Gegenform (11) mit dem zweimal angespritzten Werkstück (59),
**dadurch gekennzeichnet, dass**
am Gegenformträger (9) für die Gegenform (11) ein Antriebsorgan (27) aufgesetzt ist, dessen Abtriebselement (29) mit einer im Gegenformträger (9) gelagerten Übertriebswelle (33) in Wirkverbindung steht, an deren unteren einen Ende eine Kupplung (35) zum alternativen Ankuppeln an einer von zwei Auswerferwellen (39) in der Gegenform (11) angebracht ist.

2. Spritzgiessmaschine nach Anspruch 1, **dadurch gekennzeichnet, dass** das Antriebsorgan (27) einen Linearantriebsmotor mit einer Zahnstange (29) als Abtriebselement zum Antrieb der Übertriebswelle (33) umfasst oder dass das Antriebsorgan (27) einen Drehantriebsmotor zum direkten oder indirekten Antrieb der Übertriebswelle (33) umfasst.

3. Spritzgiessmaschine nach einem der Ansprüche 1 oder 2, **dadurch gekennzeichnet, dass** die beiden Auswerferwellen (39) durch ein Getriebe bildende Übertriebsräder (51) miteinander formschlüssig drehbar verbunden sind.

4. Spritzgiessmaschine nach einem der Ansprüche 1 bis 3, **dadurch gekennzeichnet, dass** am Trägerrahmen (9) über der Gegenform (11) eine kreisförmige Führungsscheibe (55) drehfest angebracht ist, an deren Peripherie diagonal gegenüberliegend zwei im wesentlichen halbkreisförmige Ausnehmungen eingelassen sind, in welche an den oberen Enden der Auswerferwellen (39) angebrachte Kupplungskeile (37) hineinragen.

5. Spritzgiessmaschine nach Anspruch 4, **dadurch gekennzeichnet, dass** der Radius (R) der Führungsscheibe (55) unwesentlich kleiner ist als der Abstand (X) der innen liegenden Flanken (59) der Kupplungskeile (37) vom Drehzentrum (Z), das in der Drehachse (A) der Gegenform (11) liegt.

6. Spritzgiessmaschine nach einem der Ansprüche 4 oder 5, **dadurch gekennzeichnet, dass** am unteren Ende der Übertriebswelle (33) ein Kupplungsschlitz (35) ausgebildet ist, welcher dazu ausgebildet und bestimmt ist, abwechselnd einen der beiden Kupplungskeile (37) an den oberen Enden der Auswerferwellen (39) aufzunehmen, wenn die Gegenform (11) parallel zum Gegenformträger (9) liegt, zur Erstellung einer formschlüssigen Antriebs-Verbindung zwischen der Übertriebswelle (33) und der Auswerferwelle (39).

7. Spritzgiessmaschine nach Anspruch 6, **dadurch gekennzeichnet, dass** beim Drehen der Gegenform (11) die beiden innen liegenden Flanken (59) der Kupplungskeile (37) durch den minimalen Abstand (X-R) von der Peripherie der Führungsscheibe (55) ein Verdrehen der Auswerferwellen (39) verhindern.
